# EUROPÄISCHE PATENTSCHRIFT

(11) **EP 2 295 840 B1**
(45) Veröffentlichungstag und Bekanntmachung des Hinweises auf die Patenterteilung: **25.12.2013**
(21) Anmeldenummer: 10007480.6
(22) Anmeldetag: 20.07.2010
(51) Int. Cl.: F16L 11/12, G01L 7/02

(54) **Fluidleitung mit Druckanzeigemaßnahmen**
Fluid conduit with pressure display measures
Conduite de fluide dotée de mesures d'affichage de pression

(30) Priorität: 15.09.2009 DE 102009041528
(43) Veröffentlichungstag der Anmeldung: 16.03.2011
(73) Patentinhaber: FESTO AG & Co. KG, 73734 Esslingen (DE)
(72) Erfinder: Hartnagel, Rolf, 73732 Esslingen (DE); Epmaier, Andre, 32351 Sternwede (DE)
(74) Vertreter: Abel, Martin

(56) Entgegenhaltungen:
- DE-U1- 20 004 326
- DE-U1-202008 015 718

## Beschreibung

Die Erfindung betrifft eine Fluidleitung, mit einer einen Fluidkanal für unter Druck stehendes Fluid umgrenzenden Leitungswand, die mindestens ein durch den im Fluidkanal herrschenden Fluiddruck beaufschlagtes Anzeigemittel aufweist, das über derart drucksensitive Eigenschaften verfügt, dass es bei Veränderung des im Fluidkanal herrschenden Fluiddruckes in von außerhalb der Fluidleitung sichtbarer Weise seine optischen Eigenschaften ändert.

Zur Übertragung von unter atmosphärischem Überdruck stehenden Fluiden, insbesondere flüssiger oder gasförmiger Art, werden vielfach Fluidleitungen eingesetzt, die beispielsweise rohrförmig starr oder biegeflexibel in Form von Fluidschläuchen ausgebildet sind. Die DE 84 08 571 U1 beschreibt eine solche, als Pneumatikschlauch ausgebildete Fluidleitung.

Für viele Anwendungen in der Fluidtechnik ist es erforderlich oder wenigstens sinnvoll, den Fluiddruck des verwendeten Druckfluides, beispielsweise Drucköl oder Druckluft, zu überwachen. Bisher werden für solche Überwachungsaufgaben spezielle, insbesondere als Manometer ausgebildete Druckanzeigeeinrichtungen verwendet, wie sie beispielsweise aus der DE 200 21 111 U1 hervorgehen. Diese Druckanzeigeeinrichtungen werden an einer dafür vorgesehenen Stelle an einen Körper angeschlossen, in dem das hinsichtlich seines Fluiddruckes zu überwachende Fluid strömt. Nachteilig bei solchen Überwachungsmaßnahmen ist abgesehen von der aufwendigen Herstellung der Druckanzeigeeinrichtungen auch der Umstand, dass die Überprüfung immer nur an ganz bestimmten Orten durchgeführt werden kann, nämlich dort, wo die Druckanzeigeeinrichtung installiert ist.

Aus der DE 200 04 326 U1 ist eine Betätigungseinrichtung bekannt, die einen in besonderer Weise konfigurierten Kontraktionsschlauch aufweist, um eine Kraftübertragung ohne zusätzliche integrierte Strangelemente zu ermöglichen. Der in seinem Aufbau einer Fluidleitung der eingangs genannten Art entsprechende Schlauchkörper des Kontraktionsschlauches ist beispielsweise in mehrere Bereiche unterteilt, die über unterschiedliche Materialeigenschaften verfügen, um dem Schlauchkörpermaterial gezielt besondere elastische Eigenschaften aufzuprägen. Bei einer Innendruckbeaufschlagung verändert der Schlauchkörper seine Form.

In der DE 20 2008 015 718 U1 wird ein Brauseschlauch beschrieben, der so ausgelegt ist, dass er temperaturabhängig seine Farbgebung ändert.

Die DE 600 10 041 T2 offenbart eine Zahnbürste, die mit einer ein druckanzeigendes Material aufweisenden Anzeigevorrichtung ausgestattet ist. Die Anzeigevorrichtung kann ein Signal hervorrufen, beispielsweise einen Farbwechsel, wenn beim Zähneputzen ein gewisser Bürstdruck aufgebracht wird.

Es ist die Aufgabe der vorliegenden Erfindung, Maßnahmen vorzusehen, die auf kostengünstige und einfache Weise eine Drucküberwachung eines in einer Fluidleitung strömenden Fluides ermöglichen.

Zur Lösung dieser Aufgabe ist in Verbindung mit einer Fluidleitung der eingangs genannten Art vorgesehen, dass es sich bei den sich ändernden optischen Eigenschaften zumindest um wenigstens das farbliche Erscheinungsbild des Anzeigemittels handelt.

Auf diese Weise ist eine Drucküberwachung ohne spezielles mechanisches und/oder elektronisches Gerät möglich, und zwar vor Ort direkt an der Fluidleitung, die das hinsichtlich seines Fluiddruckes zu überwachende Fluid enthält. Ändert sich der Fluiddruck in einem relevanten Maße, beeinflusst dies die optischen Eigenschaften des als Bestandteil der Leitungswand ausgeführten Anzeigemittels, was einem Betrachter eindeutig eine Druckänderung zu erkennen gibt. Möglich ist beispielsweise eine zweistufige Anzeige dahingehend, dass die Anzeigemittel unterhalb einer gewissen Druckschwelle ein erstes optisches Erscheinungsbild bieten, das sich bei Überschreiten dieser Druckschwelle in ein vom ersten Erscheinungsbild abweichendes zweites Erscheinungsbild verändert. Hilfreich ist dies beispielsweise bei einer ständig erforderlichen Drucküberwachung oder auch in Fällen, bei denen beispielsweise das Entfernen einer Fluidleitung durch einen Verbraucher davon abhängig gemacht werden soll, ob die Fluidleitung noch unter Innendruck steht oder nicht. Besonders vorteilhaft ist die dahingehende erfindungsgemäße Drucksensitivität des Anzeigemittels, dass es bei einer Änderung des auf es einwirkenden Fluiddruckes eine Farbänderung ausführt oder vermittelt, so dass der Betrachter anhand eines Farbumschlages auf die momentan in der Fluidleitung herrschenden Druckverhältnisse schließen kann. Beispielsweise kann die Farbe der Anzeigemittel mit zunehmendem Fluidinnendruck intensiver oder dunkler werden. Beispielsweise kann die Schlauchfarbe von transparent auf opak wechseln. Denkbar ist eine durch die Druckbeaufschlagung stattfindende Änderung des Brechungsindexes des Anzeigemittels, so dass eine zuvor heller erscheinende Fläche dunkler erscheint, oder umgekehrt. Da das Anzeigemittel schon bei der Herstellung der Fluidleitung in die Leitungswand integriert werden kann, lässt sich eine mit integrierten Druckanzeigemitteln ausgestattete Fluidleitung verglichen mit einer konventionellen Fluidleitung ohne gravierende Mehrkosten produzieren.

Vorteilhafte Weiterbildungen der Erfindung gehen aus den Unteransprüchen hervor.

Wenn sich das mindestens eine Anzeigemittel über die gesamte axiale Länge der Leitungswand erstreckt, kann die visuelle Drucküberprüfung bequem an jeder Stelle entlang der Fluidleitung vorgenommen werden. Es kann sich hierbei um eine kontinuierliche Ausdehnung des Anzeigemittels über die Leitungslänge handeln, oder auch um eine sich über die gesamte Länge hinweg erstreckende intervallweise Anordnung beispielsweise in Form von mit regelmäßigen Längsabständen angeordneten Abschnitten des Anzeigemittels. Jedenfalls hat die sich über die gesamte Länge der Leitungswand erstreckende Ausdehnung des Anzeigemittels den Vorteil, dass es unabhängig davon zur Verfügung steht, welche Länge eine Fluidleitung hat oder an welcher Stelle sie von einer beispielsweise in Meterware vorliegenden Ausgangsleitung abgelängt worden ist.

In der Umfangsrichtung der Leitungswand kann sich das Anzeigemittel entweder über den gesamten Leitungsumfang erstrecken oder über nur einen Teilumfang. Im letztgenannten Fall können auch mehrere Anzeigemittel vorhanden sein, die an mehreren in der Umfangsrichtung der Leitungswand zueinander beabstandeten Stellen angeordnet sind.

Die voll umfängliche Anordnung hat den Vorteil, dass rings um die Fluidleitung herum eine Sichtbarkeit der Anzeigemittel gewährleistet sein kann. Die nur abschnittsweise Anordnung hat demgegenüber den Vorteil eines geringeren Materialverbrauches und je nach Herstellung der Fluidleitung auch einer weniger starken Einschränkung des Fluidkanalquerschnittes bei vergleichbarem Leitungsaußendurchmesser.

Besonders vorteilhaft ist eine dahingehende Ausgestaltung des Anzeigemittels, dass es elastisch verformbar ist und in Abhängigkeit vom Verformungsgrad unterschiedliche optische Eigenschaften aufweist. Insbesondere kann das sich einem Betrachter präsentierende farbliche Erscheinungsbild vom Verformungsgrad des reversibel verformbaren Anzeigemittels abhängen.

Ein besonders zweckmäßiger Aufbau des mindestens einen Anzeigemittels sieht ein elastisch verformbares Grundmaterial sowie eine Vielzahl von unter gegenseitigem Abstand in verteilter Form in und/oder an dem Grundmaterial angeordneter Anzeigepartikel vor. Das Grundmaterial ist vorzugsweise transparent, wobei die in das Grundmaterial insbesondere eingebetteten bzw. eingelagerten Anzeigepartikel diesbezüglich weniger stark oder überhaupt nicht lichtdurchlässig ausgebildet sind. Wird das Grundmaterial aufgrund eines im Fluidkanal ansteigenden Fluiddruckes zusammengedrückt, verändern die Anzeigepartikel ihre Relativlage zueinander, so dass sie dichter beieinander und/oder übereinander liegen, was die Durchsichtigkeit des Anzeigemittels insgesamt verringert, so dass von außen her eine intensivere und insbesondere dunklere Farberscheinung erkennbar ist.

Bei dem Grundmaterial handelt es sich vorzugsweise um einen Kunststoffschaum, der aufgrund seiner Porosität reversibel kompressibel ist. Es handelt sich vorzugsweise um einen geschlossenporigen Kunststoffschaum, so dass das im Fluidkanal strömende Fluid nicht in die Poren eindringen kann, wenn das Grundmaterial eine unmittelbare Begrenzungsfläche des Fluidkanals bildet.

Als Anzeigepartikel kommen insbesondere Farbpigmente zum Einsatz, die zweckmäßigerweise untereinander die gleiche Farbe haben. Es kann sich hierbei um organische oder nicht organische Pigmente handeln. Durch die Auswahl bestimmter Farbpigmente lässt sich das grundsätzliche farbliche Erscheinungsbild des Anzeigemittels beeinflussen, so dass die Möglichkeit besteht, Fluidleitungen mit farblich voneinander abweichenden Anzeigemitteln bereitzustellen, die für voneinander abweichende Zwecke nutzbar sind. Man kann beispielsweise die Verwendung der Farbgebung davon abhängig machen, welche Art von Fluid in der Fluidleitung geführt werden soll und/oder welche Druckhöhe überwacht werden soll.

Prinzipiell ist es möglich, ein und dieselbe Fluidleitung gleichzeitig mit mehreren Anzeigemitteln auszustatten, die sich in ihrer Druckempfindlichkeit und/oder in den optischen Veränderungseigenschaften voneinander unterscheiden, so dass bei ein und derselben Fluidleitung sehr einfach unterschiedliche Drücke und insbesondere Druckschwellen überwacht oder überprüft werden können.

Ein besonders vorteilhafter Aufbau der Leitungswand enthält einen zweckmäßigerweise die Außenfläche der Fluidleitung bildenden und im Querschnitt ringförmigen Wandkörper, der lichtdurchlässig ausgebildet ist, so dass durch ihn hindurch das mindestens eine Anzeigemittel sichtbar ist, das an seiner Innenseite oder unmittelbar in seinem Körperinnern angeordnet ist. Besonders zweckmäßig ist die Anordnung des Anzeigemittels an der Innenseite des Wandkörpers, da letzterer in diesem Fall keine besondere Verformungsfähigkeit aufweisen muss, um ein Ansprechen der Anzeigemittel zu ermöglichen. Man kann den Wandkörper in der bei bisherigen Fluidleitungen üblichen Weise ausbilden, beispielsweise aus einem Polyurethanmaterial. Das an der Innenseite des Wandkörpers angeordnete Anzeigemittel gelangt in direkten Kontakt mit dem geführten Fluid und kann dementsprechend druckkraftmäßig beeinflusst und insbesondere verformt werden.

Eine Sichtbarkeit des Anzeigemittels in der Umfangsrichtung rings um die Fluidleitung herum kann sehr einfach gewährleistet werden, wenn das Anzeigemittel als den Innenumfang des Wandkörpers vollständig auskleidende und vorzugsweise hohlzylindrische Schicht ausgebildet ist. Hiervon abweichend besteht allerdings auch die Möglichkeit, ein oder mehrere Anzeigemittel als Streifen am Innenumfang des Wandkörpers anzuordnen. In allen Fällen sind der Wandkörper und das mindestens eine Anzeigemittel zweckmäßigerweise stoffschlüssig miteinander verbunden, was insbesondere durch sogenanntes Coextrudieren sehr einfach bei der Herstellung der Fluidleitung bewerkstelligt werden kann.

Damit ein Betrachter problemlos die Bedeutung des aktuellen optischen Erscheinungsbildes des Anzeigemittels ermessen kann, ist es von Vorteil, wenn an der Leitungswand mindestens eine ständig von außen her sichtbare Vergleichsmarkierung vorhanden ist. Eine solche Vergleichsmarkierung ist insbesondere so ausgebildet, dass sie zumindest im Wesentlichen dem Erscheinungsbild des Anzeigemittels bei einem vorbestimmten Druck oder Druckbereich des im Fluidkanal herrschenden Fluiddruckes entspricht. Zweckmäßig ist die Realisierung mehrerer und insbesondere wenigstens zweier Vergleichsmarkierungen mit sich voneinander unterscheidendem optischem Erscheinungsbild, wobei jedes dieser Erscheinungsbilder einem von mehreren bei unterschiedlichen Drücken oder Druckbereichen des Fluiddruckes auftretenden optischen Erscheinungsbildern des mindestens einen Anzeigemittels entspricht. Dadurch lässt sich zweifelsfrei mit einem Blick erkennen, in welchem Druckbereich sich der aktuell herrschende Fluiddruck befindet.

Bei Bedarf kann der mindestens einen Vergleichsmarkierung auch eine an der Leitungswand angeordnete Druckinformation zugeordnet sein, beispielsweise eine numerische oder alphanumerische Beschriftung mit Angabe des der Vergleichsmarkierung entsprechenden Druckbereiches.

Die mindestens eine Vergleichsmarkierung erstreckt sich zweckmäßigerweise kontinuierlich über die gesamte Länge der Fluidleitung. Alternativ kann mit gleichem Effekt auch eine Vielzahl von mit Abstand zueinander über die Länge der Fluidleitung verteilter Vergleichsmarkierungen vorhanden sein. In all diesen Fällen wird die vergleichende Überprüfung an praktisch jeder beliebigen Stelle längs der Fluidleitung ermöglicht. Sofern unterschiedliche optische Erscheinungsbilder aufweisende Vergleichsmarkierungen vorhanden sind, können diese in der Umfangsrichtung der Fluidleitung nebeneinander angeordnet sein und/oder auch in abwechselnder Reihenfolge über die Leitungslänge verteilt hinweg.

Die Vergleichsmarkierungen können in beliebiger Weise an der Leitungswand vorgesehen sein. Besonders einfach ist ein Bedrucken der Leitungswand, was in einem Vorgang mit den bei der Herstellung einer Fluidleitung meist standardmäßig stattfindenden Bedruckungsvorgängen vorgenommen werden kann, die dazu dienen, die Fluidleitung hinsichtlich ihrer Herkunft und/oder Beschaffenheit und/oder Abmessungen und/oder Verwendungszweck etc. zu identifizieren.

Bei der erfindungsgemäßen Fluidleitung kann es sich sowohl um eine insbesondere nach Art eines Rohres ausgebildete starre Fluidleitung handeln als auch, in besonders zweckmäßiger Weise, um einen über biegeflexible Eigenschaften verfügenden Fluidschlauch.

Nachfolgend wird die Erfindung anhand der beiliegenden Zeichnung näher erläutert. In dieser zeigen:
- Figur 1: eine bevorzugte erste Ausführungsform der erfin- dungsgemäßen Fluidleitung in einem Querschnitt ge- mäß Schnittlinie I-I aus Figur 2 im drucklosen Zu- stand des Fluidkanals,
- Figur 2: einen Längenabschnitt der Fluidleitung aus Figur 1 in einer Seitenansicht mit Blickrichtung gemäß Pfeil II,
- Figur 3: die Fluidleitungen aus Figuren 1 und 2 im Quer- schnitt gemäß Schnittlinie III-III aus Figur 4 bei Auftreten eines bestimmten atmosphärischen Überdru- ckes im Innern des Fluidkanals,
- Figur 4: einen Längenabschnitt der Fluidleitung aus Figur 3 in einer Seitenansicht mit Blickrichtung gemäß Pfeil IV,
- Figur 5: eine bevorzugte weitere Ausführungsform der erfin- dungsgemäßen Fluidleitung in einem Querschnitt ge- mäß Schnittlinie V-V aus Figur 6 im drucklosen Zu- stand des Fluidkanals,
- Figur 6: einen Längenabschnitt der Fluidleitung aus Figur 5 in einer Seitenansicht mit Blickrichtung gemäß Pfeil VI, wobei an der Außenfläche der Leitungswand vorhandene Vergleichsmarkierungen sichtbar sind,
- Figur 7: einen Querschnitt durch die Fluidleitung aus Figuren 5 und 6 im Zustand eines im Fluidkanal herr- schenden atmosphärischen Überdruckes und im Quer- schnitt gemäß Schnittlinie VII-VII aus Figur 8,
- Figur 8: einen Längenabschnitt der Fluidleitung aus Figur 7 in einer Seitenansicht mit Blickrichtung gemäß Pfeil VIII, und
- Figur 9: einen Längenabschnitt einer weiteren Ausgestaltung der Fluidleitung in einer Seitenansicht analog Fi- gur 6, wobei eine andere Art von Vergleichsmarkie- rungen vorhanden ist.

Alle Ausführungsbeispiele zeigen eine insgesamt mit Bezugsziffer 1 bezeichnete Fluidleitung, die in allen Fällen als flexibler Fluidschlauch ausgebildet ist, der so biegbar ist, dass seine Längsachse 2 eine Krümmung aufweist. Insgesamt verfügt die Fluidleitung 1 aber über eine ausreichende Festigkeit, um Durchmesserveränderungen ihres Außendurchmessers zu vermeiden, solange der in ihrem Innern verlaufende Fluidkanal 3 mit einem Betriebsdruck beaufschlagt wird, der einen bestimmten Maximaldruck nicht überschreitet. Die Fluidleitungen des Ausführungsbeispiels sind für maximale Betriebsdrücke im Bereich von etwa 10 bar ausgelegt.

Die Fluidleitung verfügt über eine die erforderliche Biegeflexibilität und zugleich Festigkeit aufweisende Leitungswand 4, die zweckmäßigerweise im Wesentlichen hohlzylindrisch ausgebildet ist und die den schon erwähnten Fluidkanal 3 radial außen umgrenzt. Die oben genannte Längsachse 2 ist auch die Längsachse der Leitungswand 4. Insgesamt ist die Leitungswand 4 also im Wesentlichen rohrförmig ausgebildet, allerdings mit der gewünschten Biegeelastizität.

Hiervon abweichend könnte die Fluidleitung 1 auch ein insgesamt nicht biegbares, starres Rohr sein.

Die Fluidleitung 1 wird üblicherweise dazu genutzt, um durch ihren Fluidkanal 3 ein unter atmosphärischem Überdruck stehendes Fluid hindurchzuleiten. Hierzu wird die eine entsprechende Länge aufweisende Fluidleitung 1 an ihren beiden Stirnseiten unter Vermittlung nicht weiter gezeigter Anschlussvorrichtungen an geeignete fluidtechnische Geräte angeschlossen, beispielsweise einerseits an ein Steuerventil und andererseits an einen zu betätigenden Arbeitszylinder. Grundsätzlich sind die Anwendungsmöglichkeiten jedoch vielfältig und nicht auf den erläuterten Anwendungsfall beschränkt.

Die Fluidleitung 1 ist je nach Ausgestaltung mit einem oder mehreren Anzeigemitteln 5 ausgestattet, die eine Visualisierung des in dem Fluidkanal herrschenden Fluiddruckes ermöglichen, so dass ein sich neben der Fluidleitung 1 aufhaltender Betrachter in der Lage ist, Informationen über die im Fluidkanal 3 herrschenden Druckverhältnisse zu erhalten. Angezeigt werden allerdings in der Regel nur gewisse Druckbereiche, wobei es sich bei den Ausführungsbeispielen um jeweils nur zwei Druckbereiche handelt, die durch einen Druckschwellwert als Grenzwert voneinander getrennt sind. Die Ausführungsbeispiele sind so ausgelegt, dass ein anzeigbarer unterer Druckbereich zwischen dem Atmosphärendruck und etwa 1 - 1,5 bar atmosphärischem Überdruck liegt, während ein anzeigbarer obere Druckbereich oberhalb dieses unteren Druckbereiches angesiedelt ist.

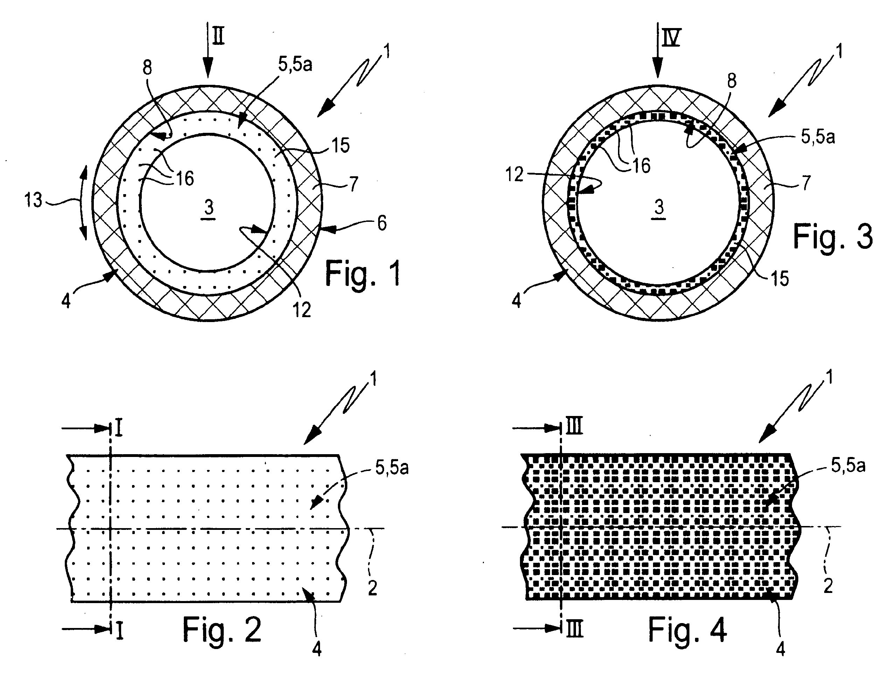

Bei den abgebildeten Ausführungsbeispielen zeigen die Figuren 1, 2, 5, 6 und 9 den Zustand im unteren Druckbereich, wobei der Fluidkanal 3 konkret drucklos ist. Die Figuren 3, 4 sowie 7 und 8 zeigen den Zustand in dem erhöhten oberen Druckbereich, exemplarisch bei etwa 6 bis 8 bar atmosphärischem Überdruck.

Die Leitungswand 4 aller Ausführungsbeispiele besitzt einen Mehrkomponentenaufbau. Sie besteht zum einen aus dem mindestens einen Anzeigemittel 5 und zum anderen aus einem zweckmäßigerweise unmittelbar die Außenoberfläche 6 der Leitungswand 4 definierenden Wandkörper 7. Der Wandkörper 7 hat einen ringförmigen Querschnitt und ist lichtdurchlässig ausgebildet, wobei sich die Lichtdurchlässigkeit bei den Ausführungsbeispielen auf den gesamten Wandkörper 7 erstreckt. Grundsätzlich könnte die Lichtdurchlässigkeit aber auch auf einen oder mehrere Bereiche beschränkt sein.

Vorzugsweise besteht der Wandkörper 7 aus einem transparenten Polyurethanmaterial.

Der Wandkörper 7 gibt der Fluidleitung 1 die Form der Außenoberfläche 6 vor. Selbige kann beliebig sein. In den meisten Fällen liegt eine zylindrische und insbesondere kreiszylindrische Außenoberfläche 6 vor. Andere runde Außenkonturen oder auch mehreckige Außenkonturen ließen sich ebenfalls verwirklichen.

Das mindestens eine Anzeigemittel 5 ist bei allen Ausführungsbeispielen an der dem Fluidkanal 3 zugewandten Innenfläche 8 des bevorzugt im Wesentlichen rohrförmigen Wandkörpers 7 angeordnet. Dabei sind Anzeigemittel 5 und Wandkörper 7 fest und insbesondere unlösbar unter Bildung der Leitungswand 4 miteinander verbunden. Bevorzugt wird eine stoffschlüssige Verbindung, die insbesondere direkt bei der Herstellung der Leitungswand 4 realisiert wird. Zweckmäßigerweise geschieht dies durch Coextrusion des Wandkörpers 7 und des mindestens einen Anzeigemittels 5 mittels einer geeignet ausgebildeten Extrudiervorrichtung. Prinzipiell könnten die Komponenten aber auch beispielsweise miteinander verklebt sein.

Das an der Innenseite bzw. Innenfläche 8 des Wandkörpers 7 befestigte Anzeigemittel 5 bildet unmittelbar selbst eine den Fluidkanal 3 begrenzende Kanalwandfläche 12. Somit ist das im Fluidkanal 3 strömende Fluid in der Lage, direkt auf das Anzeigemittel 5 einzuwirken und auf dieses eine Druckkraft auszuüben. Diese Druckkraft ist umso höher, je höher der Fluiddruck des im Fluidkanal 3 befindlichen Fluides ist.

Das Anzeigemittel 5 hat die Besonderheit bestimmter drucksensitiver Eigenschaften, die sich darin äußern, dass das Anzeigemittel 5 bei einer Änderung des auf sie einwirkenden Fluiddruckes seine optischen Eigenschaften ändert. Diese Veränderungen in den optischen Eigenschaften sind für einen sich neben der Fluidleitung 1 aufhaltenden Betrachter durch den transparenten Wandkörper 7 hindurch sichtbar. Auf diese Weise lässt sich problemlos und ohne Einsatz von Fremdenergie von außen her erkennen, welche Druckverhältnisse momentan in dem Fluidkanal 3 herrschen. Exemplarisch findet die Änderung der optischen Eigenschaften beim Überschreiten oder Unterschreiten des den unteren und oberen Druckbereich voneinander trennenden Druckschwellwertes statt. Unterhalb des Druckschwellwertes liegt also ein erstes optisches Erscheinungsbild vor, oberhalb des Druckschwellwertes ein davon abweichendes zweites optisches Erscheinungsbild.

Allen Ausführungsbeispielen ist gemeinsam, dass sich das jeweils zugeordnete mindestens eine Anzeigemittel 5 über die gesamte axiale Länge der Leitungswand 4 erstreckt. Damit ist das Anzeigemittel 5 an jeder Stelle längs der Fluidleitung 1 problemlos von außen her sichtbar.

Das Ausführungsbeispiel der Figuren 1 bis 3 hat den weiteren Vorteil, dass sich das hier einzige Anzeigemittel 5 in der durch einen Doppelpfeil angedeuteten Umfangsrichtung 13 über den gesamten Umfang der Leitungswand 4 erstreckt. Dadurch ist es von außen her rings um die Fluidleitung 1 herum aus jedem Blickwinkel gut sichtbar. Zur Realisierung ist das Anzeigemittel 5 hierbei in Form einer im Querschnitt ringförmigen Schicht 5a ausgebildet, die die Innenfläche 8 des Wandkörpers 7 entlang des gesamten Umfanges auskleidet. Die Schicht 5a ist vorzugsweise hohlzylindrisch gestaltet.

Bedingt durch diese Art der Realisierung ist die gesamte den Fluidkanal 3 peripher begrenzende Kanalwandfläche 12 ausschließlich von der Schicht 5a des Anzeigemittels 5 gebildet. Der Wandkörper 7 selbst bildet keinen Anteil der Kanalwandfläche 12.

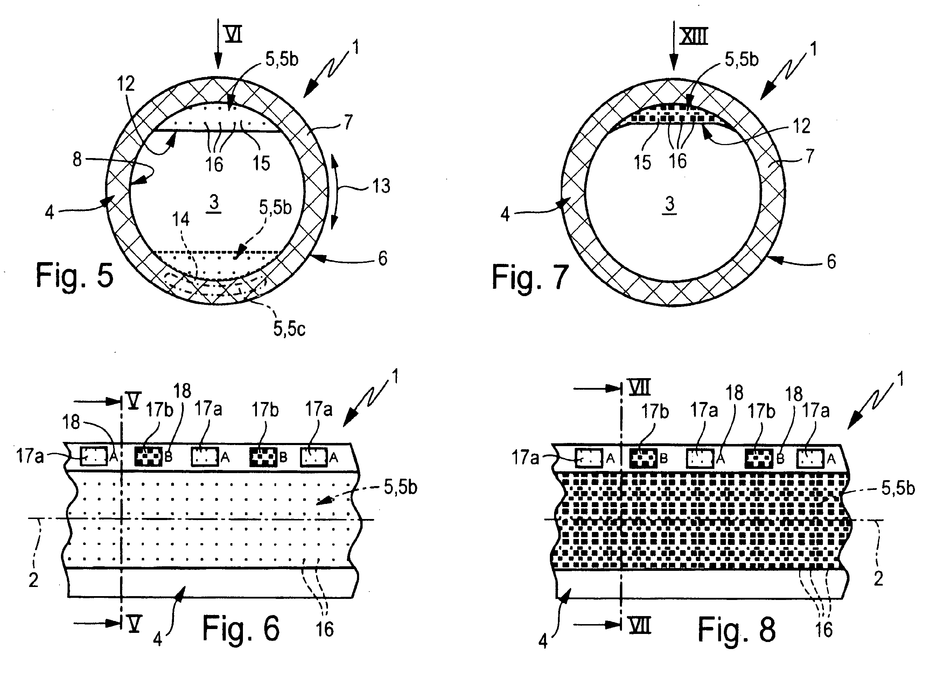

Hiervon abweichend kann das Anzeigemittel 5 gemäß den Ausführungsbeispielen der Figuren 5 bis 9 auch in Form eines Streifens 5b ausgebildet sein, der die Innenfläche 8 des Wandkörpers 7 nur teilweise bedeckt und sich, beschränkt auf eine gewisse Stelle des Innenumfanges des Wandkörpers 7, in der Achsrichtung der Längsachse 2 der Fluidleitung 1 erstreckt. Da der Wandkörper 7 somit an seiner Innenfläche bereichsweise unabgedeckt ist, wird die Kanalwandfläche 12 teils von dem streifenförmigen Anzeigemittel 5 und teils von dem unabgedeckten Bereich der Innenfläche 8 definiert.

Diese Ausführungsform hat den Vorteil, dass der Querschnitt des Fluidkanals 3 durch das Anzeigemittel 5 weniger stark eingeschränkt wird als bei einer in sich geschlossenen ringförmigen Struktur gemäß Figuren 1 bis 4. Allerdings ist die Sichtbarkeit des Anzeigemittels 5 hierbei auf einen gewissen Umfangsbereich der Fluidleitung 1 eingeschränkt.

Es besteht durchaus die Möglichkeit, ein und dieselbe Leitungswand 4 mit gleichzeitig mehreren streifenförmigen Anzeigemitteln 5 auszustatten. In Figur 5 ist gestrichelt ein optional mögliches zweites streifenförmiges Anzeigemittel 5 angedeutet, das in der Umfangsrichtung 13 versetzt zu dem zuvor beschriebenen Anzeigemittel 5 angeordnet ist und dessen Ausdehnung sich in der Umfangsrichtung 13 wie diejenige des anderen streifenförmigen Anzeigemittels 5 auf einen Teilumfang der Innenfläche begrenzt.

Exemplarisch liegen die beiden streifenförmigen Anzeigemittel 5 bezüglich dem Mittelpunkt des Fluidkanals 3 diametral gegenüber.

In Figur 5 ist bei 5c eine ebenfalls mögliche Anordnung und Ausbildung eines Anzeigemittels 5 strichpunktiert angedeutet. Dieses Anzeigemittel 5c befindet sich nicht an der Innenfläche 8 des Wandkörpers 7, sondern ist unmittelbar in dessen Körperinneres integriert. Es wird also vom Material des Wandkörpers 7 umschlossen. Damit sich hier allerdings die Druckänderungen des Fluides auf das Anzeigemittel 5 auswirken können ist es erforderlich, den zwischen dem Fluidkanal 3 und dem in den Wandkörper 7 integrierten Anzeigemittel 5c angeordneten Wandabschnitt 14 des Wandkörpers 7 derart dünn auszubilden, dass er sich verformen und die auf ihn durch den Fluiddruck ausgeübte Fluidkraft auf das Anzeigemittel 5c übertragen kann.

Während bei den Ausführungsbeispielen der Figuren 5 bis 9 das Anzeigemittel 5 direkt auf die hier im Querschnitt kreisförmige Innenfläche 8 des Wandkörpers 7 aufgesetzt ist, wäre es prinzipiell möglich, den Wandkörper 7 an seiner Innenseite mit einer nutartigen Ausnehmung zu versehen, in der das Anzeigemittel 5 dann versenkt ist, insbesondere in einer Weise, dass es bündig in die benachbarten Bereiche der Innenfläche 8 übergeht und die Kanalwandfläche weiterhin eine insgesamt eine stetige und bevorzugt kreisförmige Querschnittskontur besitzt.

Zweckmäßigerweise resultieren die Veränderungen in den optischen Eigenschaften bzw. im optischen Erscheinungsbild des Anzeigemittels 5 aus einer gestaltändernden Verformung. Es verfügt zu diesem Zweck vorzugsweise über eine elastisch verformbare Materialbeschaffenheit, so dass es bei steigendem Fluiddruck zusammengedrückt wird und bei abfallendem Fluiddruck selbsttätig in seine unverformte Ausgangsgestalt zurückkehrt.

Als bestmögliche Visualisierungsmaßnahme für die Druckänderung des Fluiddruckes wird eine Veränderung des von außen sichtbaren farblichen Erscheinungsbildes des Anzeigemittels 5 angesehen. Mit anderen Worten ändert sich bei einem Über- oder Unterschreiten des Druckschwellwertes der einem Betrachter durch das Anzeigemittel 5 vermittelte Farbeindruck. Alle Ausführungsbeispiele basieren auf diesem Anzeigeprinzip.

Insbesondere zur Realisierung dieses Anzeigeprinzips besteht das Anzeigemittel 5 bevorzugt aus einem elastisch verformbaren Grundmaterial 15 mit lichtdurchlässigen Eigenschaften. Das Grundmaterial 15 definiert die äußere Gestalt des Anzeigemittels 5, sei sie nun beispielsweise hohlzylindrisch oder streifenförmig. In dieses Grundmaterial 15 eingebettet findet sich eine Vielzahl von unter gegenseitigem Abstand verteilt angeordneten Anzeigepartikeln 16, die weniger stark lichtdurchlässig sind als das Grundmaterial oder die überhaupt keine Lichtdurchlässigkeit aufweisen.

Die Anzeigepartikel 16 sind durch ihre Einbettung in das Grundmaterial 15 bezüglich diesem ortsfest fixiert, können aber ihre relativ zueinander eingenommenen Relativpositionen dadurch ändern, dass das Grundmaterial durch die Fluidbeaufschlagung verformt wird.

Geht man beispielsweise von dem in Figuren 1, 2, 5, 6 und 9 ersichtlichen drucklosen Zustand des Fluidkanals 3 aus, bei dem die in das Grundmaterial 15 eingebetteten Anzeigepartikel 16 einen relativ großen Abstand zueinander aufweisen, so wird bei einem Druckanstieg im Fluidkanal 3 das Grundmaterial 15 komprimiert, so dass die Anzeigepartikel 16 gemäß Figuren 3, 4, 7 und 8 ihren Abstand zueinander verringern und sich zumindest teilweise auch überlagern bzw. in der Umfangsrichtung 13 überlappen. Die Verteilungsdichte der Anzeigepartikel 16 wird also erhöht, mit der Folge, dass die Transparenz des Anzeigemittels 5 insgesamt herabgesetzt wird, der von außen sichtbare Farbeindruck also intensiver bzw. dunkler wird. Idealerweise wechselt der optische Eindruck von transparent auf opak.

Bei den Anzeigepartikeln 16 handelt es sich zweckmäßigerweise um Farbpigmente, deren Farbton prinzipiell beliebig ist. Eine Anpassung des Farbtones an gewisse Einsatzzwecke der Fluidleitung wäre möglich. Zweckmäßig ist es, innerhalb ein und desselben Anzeigemittels 5 nur Farbpigmente ein und derselben Farbe zu verwenden.

Zumindest einige der Anzeigepartikel 16 könnten auch auf der Oberfläche des Grundmaterials 15 angeordnet sein. Wird beispielsweise ein helles Grundmaterial 15 verwendet, in Verbindung mit diesbezüglich dunkleren, auf der dem Wandkörper 7 zugewandten Außenfläche des Grundmaterials 15 angeordneten Anzeigepartikeln 16, kann auch dies bei ausreichender verformungsbedingter Beweglichkeit der Anzeigepartikel 16 zu einem ausreichenden Anzeigeeffekt führen.

Als derzeit optimal wird allerdings die Verwendung des schon erwähnten transparenten Grundmaterials vorgezogen, wobei man zweckmäßigerweise auf einen geschlossenporigen Kunststoffschaum zurückgreift, in den das im Fluidkanal 3 strömende Fluid wegen der geschlossenen Kanalwandfläche 12 nicht eindringen kann. Man kann insbesondere auf einen Polyurethanschaum zurückgreifen.

Der Nutzungskomfort der erfindungsgemäßen Fluidleitung kann noch verbessert werden, wenn man dem den Fluiddruck überprüfenden Betrachter Referenzmittel zur Verfügung stellt, die er mit dem Erscheinungsbild des jeweiligen Anzeigemittels 5 vergleichen kann, um anhand des Vergleichsergebnisses darauf zu schließen, welcher Betriebszustand momentan vorliegt. Es ist vorteilhaft, diese Referenzmittel unmittelbar an der Leitungswand 4 vorzusehen, so dass sie einen Bestandteil der Fluidleitung 1 bilden und in unmittelbarer Nachbarschaft zum Anzeigemittel 5 zur Verfügung stehen.

Derartige Referenzmittel bestehen exemplarisch aus jeweils mindestens einer in ständig von außen her sichtbarer Weise an der Leitungswandung 4 angeordneten Vergleichsmarkierung 17a, 17b. Es sollte mindestens eine Vergleichsmarkierung 17a, 17b vorhanden sein, deren optisches Erscheinungsbild zumindest im Wesentlichen demjenigen entspricht, den das zu vergleichende Anzeigemittel 5 in dem zu überwachenden Betriebszustand der Fluidleitung 1 aufweist. Stimmen dann bei einem visuellen Vergleich die optischen Erscheinungsbilder des Anzeigemittels 5 und der zugeordneten Vergleichsmarkierung 17a, 17b überein, weiß man, dass der in dem Fluidkanal herrschende Druck beispielsweise entweder in dem oben erläuterten unteren Druckbereich oder in dem oberen Druckbereich liegt.

Eine Optimierung der Ablesegenauigkeit ist erreichbar, wenn man für mehrere zu überwachende Drücke oder Druckbereiche jeweils eine eigene Vergleichsmarkierung 17a oder 17b vorsieht, von denen die eine in ihrem Erscheinungsbild dem Erscheinungsbild des Anzeigemittels 5 in dem unteren Druckbereich entspricht und die andere dem Erscheinungsbild der Anzeigemittel 5 bei Vorliegen des oberen Druckbereiches.

Es versteht sich, dass auf diese Weise auch für mehr als zwei Drücke oder Druckbereiche jeweils mindestens eine entsprechend gestaltete Vergleichsmarkierung 17a, 17b vorhanden sein kann.

Man kann der mindestens einen Vergleichsmarkierung 17a, 17b auch jeweils noch eine textliche und/oder numerische Information auf der Leitungswand 4 hinzufügen, beispielsweise eine Angabe des der betreffenden Vergleichsmarkierung entsprechenden Druckes oder Druckbereiches. Derartige "Bedeutungsinformationen" 18 sind in Figur 8 durch Buchstaben "A" und "B" kenntlich gemacht.

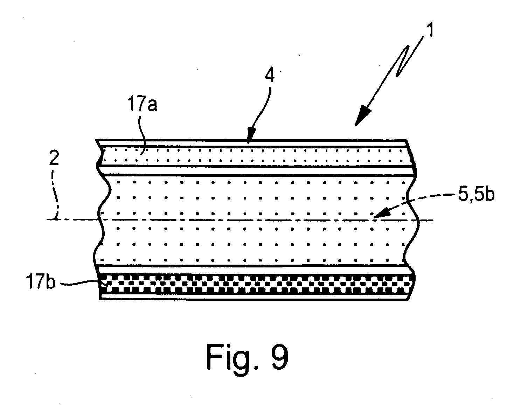

Vergleichsmarkierungen 17a, 17b sind bei allen Ausführungsbeispielen möglich, wenngleich sie in der Zeichnung nur anhand der Figuren 5 bis 9 gezeigt sind. Hier sind zwei Anordnungsweisen von Vergleichsmarkierungen 17a, 17b illustriert, wobei jeweils eine erste Vergleichsmarkierung 17a optisch einem ersten Fluiddruck oder Fluiddruckbereich entspricht und eine zweite Vergleichsmarkierung 17b einem davon abweichenden zweiten Fluiddruck oder Fluiddruckbereich. In Figuren 6 und 9 ist die Übereinstimmung des optischen Erscheinungsbildes des Anzeigemittels 5 mit der ersten Vergleichsmarkierung 17a ersichtlich, die Figur 8 zeigt die optische Übereinstimmung der Anzeigemittel 5 mit der zweiten Vergleichsmarkierung 17b.

Bei dem Ausführungsbeispiel der Figur 9 erstrecken sich sowohl die erste als auch die zweite Vergleichsmarkierung 17a, 17b kontinuierlich über die gesamte Länge der Fluidleitung 1 und sind insbesondere streifenförmig ausgebildet. Sie erstrecken sich parallel zueinander, insbesondere diesseits und jenseits eines streifenförmigen Anzeigemittels 5, 5b.

Beim Ausführungsbeispiel der Figuren 5 bis 8 sind jeweils eine Vielzahl erster und zweiter Vergleichsmarkierungen 17a, 17b vorhanden, die mit axialem Abstand zueinander über die gesamte Länge der Fluidleitung 1 verteilt an der Leitungswand 4 vorgesehen sind. Auch hier wäre eine getrennte Anordnung der ersten und zweiten Vergleichsmarkierungen 17a, 17b längs jeweils einer Markierungsreihe denkbar. Das Ausführungsbeispiel zeigt hingegen eine abwechselnde Aufeinanderfolge erster und zweiter Vergleichsmarkierungen 17a, 17b in einer einzigen sich in Achsrichtung der Längsachse 2 erstreckenden Reihe von Vergleichsmarkierungen.

Die Vergleichsmarkierungen 17a, 17b können in beliebiger Weise an der Leitungswand 4 angeordnet sein. Besonders zweckmäßig ist ein Aufbringen auf die Außenoberfläche 6 durch ein geeignetes Druckverfahren, beispielsweise in einem gemeinsamen Arbeitsgang mit dem Aufdrucken eines bei Fluidleitungen 1 meist standardmäßig vorgesehenen Informationsaufdruckes.

## Patentansprüche

1. Fluidleitung, mit einer einen Fluidkanal (3) für unter Druck stehendes Fluid umgrenzenden Leitungswand (4), die mindestens ein durch den im Fluidkanal (3) herrschenden Fluiddruck beaufschlagtes Anzeigemittel (5) aufweist, das über derart drucksensitive Eigenschaften verfügt, dass es bei Veränderung des im Fluidkanal (3) herrschenden Fluiddruckes in von außerhalb der Fluidleitung (1) sichtbarer Weise seine optischen Eigenschaften ändert, **dadurch gekennzeichnet, dass** es sich bei den sich ändernden optischen Eigenschaften zumindest um das farbliche Erscheinungsbild des Anzeigemittels (5) handelt.

2. Fluidleitung nach Anspruch 1, **dadurch gekennzeichnet, dass** sich das mindestens eine Anzeigemittel (5) über die gesamte axiale Länge der Leitungswand (4) erstreckt.

3. Fluidleitung nach Anspruch 1 oder 2, **dadurch gekennzeichnet, dass** sich das mindestens eine Anzeigemittel (5) kontinuierlich über die gesamte axiale Länge der Leitungswand (4) erstreckt.

4. Fluidleitung nach einem der Ansprüche 1 bis 3, **dadurch gekennzeichnet, dass** sich das mindestens eine Anzeigemittel (5) in der Umfangsrichtung (13) der Leitungswand (4) über deren gesamten Umfang hinweg erstreckt, insbesondere derart, dass es rings um die Fluidleitung (1) herum von außen her sichtbar ist.

5. Fluidleitung nach einem der Ansprüche 1 bis 3, **dadurch gekennzeichnet, dass** sich das mindestens eine Anzeigemittel (5) in der Umfangsrichtung (13) der Leitungswand (4) über lediglich einen Umfangs-Teilbereich der Leitungswand (4) hinweg erstreckt.

6. Fluidleitung nach Anspruch 5, **dadurch gekennzeichnet, dass** sie mehrere in der Umfangsrichtung (13) der Leitungswand mit Abstand zueinander angeordnete, sich jeweils über lediglich einen Umfangs-Teilbereich der Leitungswand (4) hinweg erstreckende Anzeigemittel (5) aufweist.

7. Fluidleitung nach einem der Ansprüche 1 bis 6, **dadurch gekennzeichnet, dass** das Anzeigemittel (5) über eine unter Veränderung seiner optischen Eigenschaften elastisch verformbare Materialbeschaffenheit verfügt und derart angeordnet ist, dass es bei einer Veränderung des im Fluidkanal (3) herrschenden Fluiddruckes eine reversible Verformung erfahren kann.

8. Fluidleitung nach einem der Ansprüche 1 bis 7, **dadurch gekennzeichnet, dass** das Anzeigemittel (5) aus einem elastisch verformbaren, zweckmäßigerweise transparenten Grundmaterial (15) und einer Vielzahl unter gegenseitigem Abstand in und/oder an dem Grundmaterial (15) verteilt angeordneter, weniger stark als das Grundmaterial (15) oder überhaupt nicht lichtdurchlässiger Anzeigepartikel (16) besteht, wobei die Anzeigepartikel (16) zweckmäßigerweise in das Grundmaterial (15) eingebettet sind und wobei das Grundmaterial (15) zweckmäßigerweise ein Kunststoffschaum ist, insbesondere ein geschlossenporiger Kunststoffschaum, bei dem es sich zweckmäßigerweise um einen Polyurethanschaum handelt.

9. Fluidleitung nach Anspruch 8, **dadurch gekennzeichnet, dass** die Anzeigepartikel (16) von Farbpigmenten mit untereinander insbesondere der gleichen Farbe gebildet sind.

10. Fluidleitung nach einem der Ansprüche 1 bis 9, **dadurch gekennzeichnet, dass** die Leitungswand (4) einen im Querschnitt ringförmigen, lichtdurchlässigen Wandkörper (7) aufweist, an dessen Innenseite (8) und/oder in dessen Körperinnern das Anzeigemittel (5) angeordnet ist und der zweckmäßigerweise aus Polyurethan besteht.

11. Fluidleitung nach Anspruch 10, **dadurch gekennzeichnet, dass** das Anzeigemittel (5) als den Innenumfang (8) des Wandkörpers (7) ringsum auskleidende, insbesondere hohlzylindrische Schicht (5a) ausgebildet ist oder dass das Anzeigemittel (5) als an einer Stelle des Innenumfanges (8) des Wandkörpers (7) angeordneter, sich in der Längsrichtung der Fluidleitung (1) erstreckender Streifen (5b) ausgebildet ist.

12. Fluidleitung nach Anspruch 10 oder 11, **dadurch gekennzeichnet, dass** der Wandkörper (7) und das Anzeigemittel (5), insbesondere durch eine Coextrusionsherstellung, stoffschlüssig miteinander verbunden sind.

13. Fluidleitung nach einem der Ansprüche 1 bis 12, **dadurch gekennzeichnet, dass** die Leitungswand (4) mindestens eine ständig von außen her sichtbare, zum Feststellen der im Fluidkanal herrschenden Druckverhältnisse mit dem aktuellen Erscheinungsbild des Anzeigemittels (5) vergleichbare Vergleichsmarkierung (17a, 17b) aufweist.

14. Fluidleitung nach Anspruch 13, **dadurch gekennzeichnet, dass** das optische Erscheinungsbild der mindestens einen Vergleichsmarkierung (17a, 17b) zumindest im Wesentlichen demjenigen des Anzeigemittels (5) bei einem vorbestimmten Druck oder Druckbereich des im Fluidkanal (3) herrschenden Fluiddruckes entspricht, wobei zweckmäßigerweise wenigstens zwei sich in ihrem optischen Erscheinungsbild voneinander unterscheidende Vergleichsmarkierungen (17a, 17b) vorhanden sind, wobei die unterschiedlichen optischen Erscheinungsbilder unterschiedlichen Drücken oder Druckbereichen des im Fluidkanal (3) herrschenden Fluiddruckes entsprechen.

15. Fluidleitung nach Anspruch 13 oder 14, **dadurch gekennzeichnet, dass** sich mindestens eine Vergleichsmarkierung (17a, 17b) kontinuierlich über die gesamte Länge der Fluidleitung (1) hinweg erstreckt und/oder dass eine Vielzahl von mit Abstand zueinander über die gesamte Länge der Fluidleitung (1) verteilter Vergleichsmarkierungen (17a, 17b) vorhanden ist.

16. Fluidleitung nach einem der Ansprüche 13 bis 15, **dadurch gekennzeichnet, dass** die mindestens eine Vergleichsmarkierung (17a, 17b) am Außenumfang (6) der Leitungswand (4) angeordnet und insbesondere aufgedruckt ist und/oder dass mindestens einer Vergleichsmarkierung (17a, 17b) eine an der Leitungswand (4) angeordnete textliche und/oder numerische Bedeutungsinformation (18) zugeordnet ist.

## Claims

1. Fluid line comprising a line wall (4) bounding a fluid passage (3) for a pressurised fluid, which line wall (4) comprises at least one indicating means (5) to which the fluid pressure prevailing in the fluid passage (3) is applied and which has pressure-sensitive characteristics which change its visual properties in a manner which is visible outside the fluid line (1) at any change in the fluid pressure prevailing in the fluid passage (3), **characterised in that** the changing visual properties involve at least the colour appearance of the indicating means (5)

2. Fluid line according to claim 1, **characterised in that** the at least one indicating means (5) extends along the entire axial length of the line wall (4).

3. Fluid line according to claim 1 or 2, **characterised in that** the at least one indicating means (5) extends continuously along the entire axial length of the line wall (4).

4. Fluid line according to any of claims 1 to 3, **characterised in that** the at least one indicating means (5) extends over the entire circumference of the line wall (4) in the circumferential direction (13) thereof, in particular in such a way that it is visible all around the fluid line (1) from the outside.

5. Fluid line according to any of claims 1 to 3, **characterised in that** the at least one indicating means (5) extends only over a circumferential sub-section of the line wall (4) in the circumferential direction (13) of the line wall (4).

6. Fluid line according to claim 5, **characterised in that** it comprises a plurality of indicating means (5) arranged at a distance from one another in the circumferential direction (13) of the line wall, each of which extends only over a circumferential sub-section of the line wall (4).

7. Fluid line according to any of claims 1 to 6, **characterised in that** the indicating means (5) has elastically deformable material characteristics while changing its visual properties and is arranged such that it can be deformed reversibly at any change in the fluid pressure prevailing in the fluid passage (3).

8. Fluid line according to any of claims 1 to 7, **characterised in that** the indicating means (5) consists of an elastically deformable, preferably transparent, base material (15) and a plurality of indicating particles (16) which are distributed at a distance from one another in and/or on the base material (15) and which are less transparent than the base material (15) or not transparent at all, wherein the indicating particles (16) are expediently embedded into the base material (15) and wherein the base material (15) expediently is a plastic foam, in particular a closed-cell plastic foam, expediently being a polyurethane foam.

9. Fluid line according to claim 8, **characterised in that** the indicating particles (16) are represented by pigments, in particular of the same colour.

10. Fluid line according to any of claims 1 to 9, **characterised in that** the line wall (4) has a transparent wall body (7) having an annular cross-section, on the inside (8) and/or on the body interior of which the indicating means (5) is located and which is expediently made of polyurethane.

11. Fluid line according to claim 10, **characterised in that** the indicating means (5) is designed as an in particular hollow-cylindrical layer (5a) lining the whole of the inner circumference (8) of the wall body (7), or **in that** the indicating means (5) is designed as a strip (5b) arranged at a position of the inner circumference (8) of the wall body (7) and extending in the longitudinal direction of the fluid line (1).

12. Fluid line according to claim 10 or 11, **characterised in that** the wall body (7) and the indicating means (5) are joined together by adhesive force, being in particular produced in a co-extrusion process.

13. Fluid line according to any of claims 1 to 12, **characterised in that** the line wall (4) is provided with at least one comparison marking (17a, 17b) which is always visible from outside and which can be compared to the current appearance of the indicating means (5) in order to determine the pressure conditions prevailing in the fluid passage.

14. Fluid line according to claim 13, **characterised in that** the visual appearance of the at least one comparison marking (17a, 17b) at least substantially corresponds to that of the indicating means (5) at a predetermined pressure or pressure range of the fluid pressure prevailing in the fluid passage (3), wherein expediently at least two comparison markings (17a, 17b) differing from one another in their visual appearance are provided, the different visual appearances corresponding to different pressures or pressure ranges of the fluid pressure prevailing in the fluid passage (3).

15. Fluid line according to claim 13 or 14, **characterised in that** the at least one comparison marking (17a, 17b) extends continuously along the entire length of the fluid line (1), and/or **in that** a plurality of comparison markings (17a, 17b) distributed at a distance from one another along the entire length of the fluid line (1) is provided.

16. Fluid line according to any of claims 13 to 15, **characterised in that** the at least one comparison marking (17a, 17b) is arranged and in particular printed on the outer circumference (6) of the line wall (4), and/or **in that** a textual and/or numerical information (8) on its meaning placed on the line wall (4) is assigned to at least one comparison marking (17a, 17b).

## Revendications

1. Conduite de fluide avec une paroi de conduite (4) entourant un canal de fluide (3) pour un fluide sous pression, qui comprend au moins un moyen d'affichage (5) soumis à la pression du fluide régnant dans le canal de fluide (3), qui présente des propriétés sensibles à la pression de façon à ce que, lors d'une modification de la pression de fluide régnant dans le canal de fluide (3), ses propriétés optiques changent d'une manière visible de l'extérieur de la conduite de fluide (1), **caractérisée en ce que** les propriétés optiques variables comprennent au moins l'aspect coloré du moyen d'affichage (5).

2. Conduite de fluide selon la revendication 1, **caractérisée en ce que** l'au moins un moyen d'affichage (5) s'étend sur toute la longueur axiale de la paroi de conduite (4).

3. Conduite de fluide selon la revendication 1 ou 2, **caractérisée en ce que** l'au moins un moyen d'affichage (5) s'étend de manière continue sur toute la longueur axiale de la paroi de conduite (4).

4. Conduite de fluide selon l'une des revendications 1 à 3, **caractérisée en ce que** l'au moins un moyen d'affichage (5) s'étend dans la direction circonférentielle (13) de la paroi de conduite (4) sur toute sa circonférence, plus particulièrement de façon à ce qu'il soit visible de l'extérieur tout autour de la conduite de fluide (1).

5. Conduite de fluide selon l'une des revendications 1 à 3, **caractérisée en ce que** l'au moins un moyen d'affichage (5) s'étend dans la direction circonférentielle (13) de la paroi de conduite (4) uniquement sur une partie de la circonférence de la paroi de conduite (4).

6. Conduite de fluide selon la revendication 5, **caractérisée en ce qu'**elle comprend plusieurs moyens d'affichage (5) disposés dans la direction circonférentielle (13) de la paroi de conduite à une certaine distance les uns par rapport aux autres et s'étendant uniquement sur une partie de la circonférence de la paroi de conduite (4).

7. Conduite de fluide selon l'une des revendications 1 à 6, **caractérisée en ce que** le moyen d'affichage (5) est constitué d'un matériau élastiquement déformable et changeant de propriétés optiques lorsqu'il est déformé et est disposé de façon à ce que, lors d'un changement de la pression de fluide régnant dans le canal de fluide (3), il puisse subir une déformation réversible.

8. Conduite de fluide selon l'une des revendications 1 à 7, **caractérisée en ce que** le moyen d'affichage (5) est constitué d'un matériau de base (15) déformable élastiquement et transparent et d'une pluralité de particules d'affichage (16) disposées de manière répartie à une distance définie entre eux dans et/ou sur le matériau de base (15), moins épaisses que le matériau de base (15) ou pas du tout transparentes, ces particules d'affichage (16) étant intégrées de manière appropriée dans le matériau de base (15) et le matériau de base (15) étant, de manière appropriée, une mousse de matière plastique, plus particulièrement une mousse de matière plastique à pores fermés, plus particulièrement une mousse de polyuréthane.

9. Conduite de fluide selon la revendication 8, **caractérisée en ce que** les particules d'affichage (16) sont constituées de pigments colorés ayant plus particulièrement la même couleur.

10. Conduite de fluide selon l'une des revendications 1 à 9, **caractérisée en ce que** la paroi de conduite (4) comprend un corps de paroi (7) transparent de section annulaire, sur le côté interne (8) et/ou à l'intérieur duquel le moyen d'affichage (5) est disposé et qui est constitué, de manière appropriée, de polyuréthane.

11. Conduite de fluide selon la revendication 10, **caractérisée en ce que** le moyen d'affichage (5) est conçu comme une couche (5a) cylindrique creuse recouvrant toute la circonférence interne (8) du corps de paroi (7) ou **en ce que** le moyen d'affichage (5) est conçu comme une bande (5b) s'étendant dans direction longitudinale de la conduite de fluide (1) et disposée à un endroit de la circonférence interne (8) du corps de paroi (7).

12. Conduite de fluide selon la revendication 10 ou 11, **caractérisée en ce que** le corps de paroi (7) et le moyen d'affichage (5) sont reliés entre eux avec une liaison de matière, plus particulièrement par la réalisation d'une coextrusion.

13. Conduite de fluide selon l'une des revendications 1 à 12, **caractérisée en ce que** la paroi de conduite (4) comprend au moins un marquage de comparaison (17a, 17b) visible en permanence de l'extérieur, permettant de constater les conditions de pression régnant dans le canal de fluide et pouvant être comparée avec l'aspect courant du moyen d'affichage (5).

14. Conduite de fluide selon la revendication 13, **caractérisée en ce que** l'aspect optique de l'au moins un marquage de comparaison (17a, 17b) correspond au moins globalement à celui du moyen d'affichage (5) lors d'une pression ou d'une plage de pression prédéterminée de la pression de fluide régnant dans le canal de fluide (3), au moins deux marquages de comparaison (17a, 17b) présentant des aspects optiques différents étant présents de manière appropriée, les aspects optiques différents correspondant à des pressions ou des plages de pressions différentes de la pression de fluide régnant dans le canal de fluide (3).

15. Conduite de fluide selon la revendication 13 ou 14, **caractérisée en ce qu'**au moins un marquage de comparaison (17a, 17b) s'étend de manière continue sur toute la longueur de la conduite de fluide (1) et/ou **en ce qu'**une pluralité de marquages de comparaison (17a, 17b) sont répartis avec une certaine distance entre eux sur toute la longueur de la conduite de fluide (1).

16. Conduite de fluide selon l'une des revendications 13 à 15, **caractérisée en ce que** l'au moins un marquage de comparaison (17a, 17b) est disposé et plus particulièrement imprimé sur la circonférence externe (6) de la paroi de conduite (4) et/ou **en ce que**, à au moins un marquage de comparaison (17a, 17b), correspond une information de signification (18) textuelle et/ou numérique disposée sur la paroi de conduite (4).
